# EUROPEAN PATENT SPECIFICATION

(11) **EP 4 265 101 B1**
(45) Date of publication and mention of the grant of the patent: **13.03.2024**
(21) Application number: 23153915.6
(22) Date of filing: 30.01.2023
(51) Int. Cl.: A01F 25/13, B65G 3/02, E04G 21/28

(54) **STACK PROTECTION**
STAPELSCHUTZ
PROTECTION D'EMPILEMENT

(30) Priority: 22.04.2022 FI 20224050 U
(43) Date of publication of application: 25.10.2023
(73) Proprietor: Nonas Oy, 83320 Liperi (FI)
(72) Inventor: Hirvonen, Kari, 83400 Viinijärvi (FI)
(74) Representative: Genip Oy

(56) References cited:
- JP-A- 2003 137 360
- US-A- 4 043 085
- US-A- 4 538 385
- US-A- 5 511 655

## Description

### Field of invention

The invention is related to the small-scale manual protection of stacked timber, such as especially firewood, delimbed stems, short logs or sawn timber from rain and impacts of weather while stored outdoors.

### Technical background

Firewood is usually stored outdoors in a stack or pile. The storage of firewood outdoors involves two opposite needs: not to expose the firewood to rain, and on the other hand that air circulation at the stack would be sufficient so that the firewood does not become mouldy and so that the firewood, which has possibly become wet, would dry better as a result of the air circulation.

When stored in a pile, firewood takes more space. A so-called big bag is generally used in Finland for this purpose, where the walls of the big bag have a structure that permeates air. Big bags are covered by tarpaulins or separate covers. It is also known to place big bags in line and cover them with an oblong tarpaulin. Such solutions enable, on one hand, protection against rain and, on the other hand, also sufficient air circulation, but the drawback is that their fluent use requires adequately large work machinery equipped with lifters or loaders (such as a tractor with a front loader, or a wheel loader). Taking firewood out of a big bag without a large work machine equipped with a lifter or loader is impractical and slow, because the bag is in the way.

A common solution for the storage of firewood in a stack is to lay the pieces of firewood in a stack between possible end supports. A sheet board (such as a piece of sheet roofing) with a weight is usually placed on top of such a stack, or optionally a tarpaulin that is fastened by tying or used with a weight is used. A sheet board with a weight enables good breathability but exposes the stack to wetting, especially as a result of rain that falls diagonally and melt water that runs along the edge of the sheet board. A tarpaulin, on the other hand, impairs air circulation. For this reason, firewood stored especially beside the wall of a building under a tarpaulin in a stack under the eaves is usually both wet and mouldy, not to mention that a firewood storage beside the wall of a building may increase the possibility of mischief or malicious damage, which is why this should not be done.

Other types of timber, such as mainly delimbed stems, short logs or sawn timber (such as through-sawn boards and planks) are subject to similar types of storage requirements. US patent publications 4,483,127; 4,538,385; 4,869,363; 5,511,655; 5,904,243 present different types of protection for the protection of mechanically compressed cotton bales. Mechanically compressed cotton bales typically have the size and shape of the compression chamber, in other words they have a quadrangular base (length 9.7 m and width 2.1 m) and usually a height of 2.25 m. These types of protection may also be applicable to the storage of firewood, but they are not applicable to the small-scale storage of firewood in a stack, where the key issue is that the stack protection must be installable and removable manually by a single person. In practice, the content of compressed cotton bales cannot dry while under a protection, in which case it is important to prevent wetting as a result of rain until the cotton drying plant has capacity to process the bales. This type of storage has a limited duration and usually lasts a maximum of a few weeks. US4043085A, JP2003137360A disclose other stack protection devices forming part of the state of the art. In particular, US4043085A discloses the features in the preamble of claim 1.

### Objective of invention

The objective of the invention is to facilitate especially the small-scale protection of firewood from rain and impacts of weather while stored outdoors and hence to ensure the dryness and non-moulding of the material to be combusted. This invention can be solved by means of the stack protection according to the independent claim. The stack protection is applicable to the manual protection of stacked timber also other than especially firewood, namely also delimbed stems, short logs or sawn timber from rain and impacts of weather while stored outdoors.

### Advantages of invention

The stack protection comprises i) an upper part in the shape of an oblong strip, which upper part comprises tarpaulin or consists of tarpaulin, ii) side parts in the shape of an oblong strip, which side parts are fastened to both side edges of the upper part and are shorter than the side edges, which side parts comprise a protective net or consist of a protective net, and iii) fastening means arranged in both side parts for anchoring the stack protection. The upper part is of a water-proof material. The protective net is water-tight in a limited manner, but of a material that permeates air.

According to a first aspect, such stack protection can be used for protecting a stack of firewood against rain and impacts of weather while stored outdoors quite sufficiently well, but still so that the ventilation of the stack is enabled in a sufficient manner, which enables the drying of firewood also when in a stack and on the other hand prevents the firewood from becoming mouldy. Due to the side parts, firewood can be taken from a stack of firewood also when the stack protection is in place over the stack, because the side parts or that part of the upper part that extends over the stack of firewood can be turned aside.

According to a second aspect, such stack protection enables the protection of a longer stack of firewood by means of several pieces of stack protection. This is most preferably implemented so that the pieces of stack protection are placed after one another so that the side parts come into contact with each other or at least close to each other. In this case, the upper parts partially overlap each other (or optionally) the excess parts of the upper parts can be folded under the upper part in question. By overlapping, it is possible to guide rain water and melt water to the desired direction following the height difference of the stack or the terrain contours, when the overlapping is so arranged that water running from a higher elevation towards a lower elevation along the upper part always comes on top of the next upper part.

Both side parts can be an oblong strip or comprise an oblong strip. Such stack protection is not only easier to manufacture but also withstands the strain exerted by weather better.

When the upper part and the side part comprise between them a fastening seam with a shared material, which seam is preferably a welding seam, most preferably an ultrasonic welding seam, the stack protection can be manufactured to better withstand the strain exerted by weather. Moreover, since such a fastening seam runs in the longitudinal direction, it is more easily doable from a manufacturing technology point of view.

The fastening means most preferably comprise a number of fastening rings for rope fastening. In this case, the fastening ropes are easily fastenable to the stack protection for anchoring. The fastening ropes are most preferably chosen so that they can be closed by splicing.

The fastening means can be embedded in the side parts, most preferably in the corners, and optionally also in the middle area between corners. This improves the wind resistance of the stack protection.

There can be a hem in all edges of the upper part. This increases the durability of the stack protection against fraying. In this case, it is preferable to implement the possible fastening seam so that it comes in the hem of the upper part, because it is stronger, but on the other hand so that there is no hem in the side part at that point, because in this case the material thickness to be joined together would be quite big, which would increase the working effort and working costs.

There is most preferably a hem in the outer edges of the side parts. This improves the durability of the stack protection against fraying. In this case, there is fastening means most preferably at least in one hem. This improves the wind resistance of the stack protection by preventing tearing at the point of the fastening means.

Most preferably, the tarpaulin in the upper part is of or comprises technical fabric (most preferably PVC fabric), which has a first warp thickness, and the protective net in the side part is of or comprises technical fabric net (most preferably PVC fabric net), which has a second warp thickness, so that the first warp thickness is smaller than the second warp thickness.

In addition to this or alternatively to this, the tarpaulin in the upper part can be of or comprise technical fabric (most preferably PVC fabric), the features of which optionally comprise one or more of the following:
- warp thickness 500x500 D,
- warp density 9x9 per inch (2,54 cm),
- weight 350 g/m² or at least 300 g/m².

Furthermore, in addition to this or alternatively to this, the protective net in the side parts can be of or comprise technical fabric net (most preferably PVC fabric net), the features of which optionally comprise one or more of the following:
- warp thickness 1000x1000 D,
- warp density 9x9 per inch (2,54 cm),
- weight 250 g/m².

### List of drawings

The structure and use of the stack protection are reviewed in more detail below by means of the embodiment described in the enclosed drawings FIG 1-3 by way of examples. Of the drawings:
- FIG 1: shows the stack protection installed over a stack of firewood, and a detail of the structure of the side part;
- FIG 2: shows the stack protection opened on a floor; and
- FIG 3: shows a preferred method of anchoring of the stack protection.

The same reference numbers refer to the same technical details in all FIGs.

### Detailed description of the invention

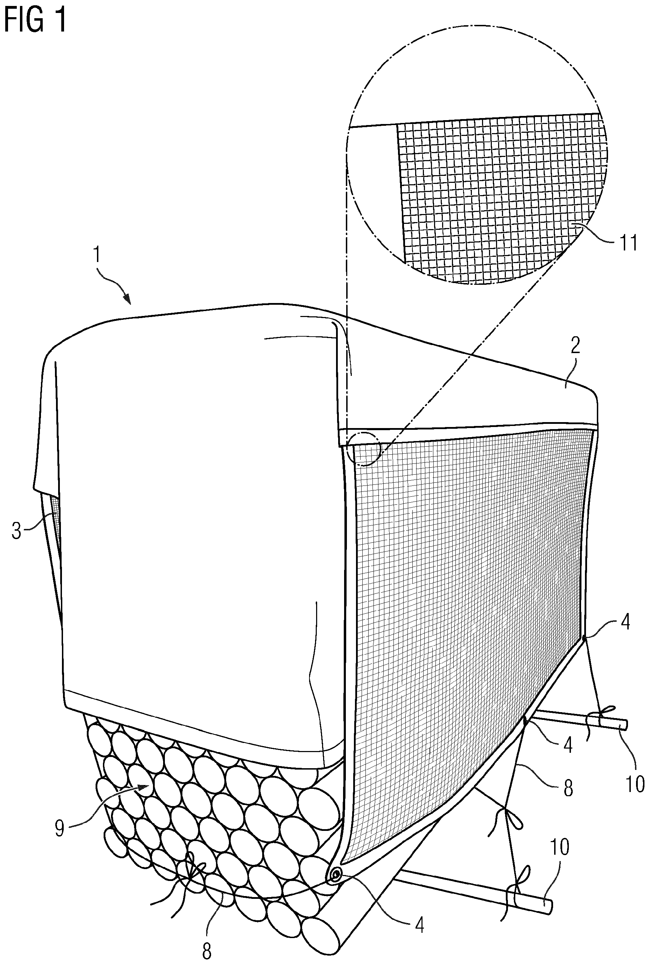

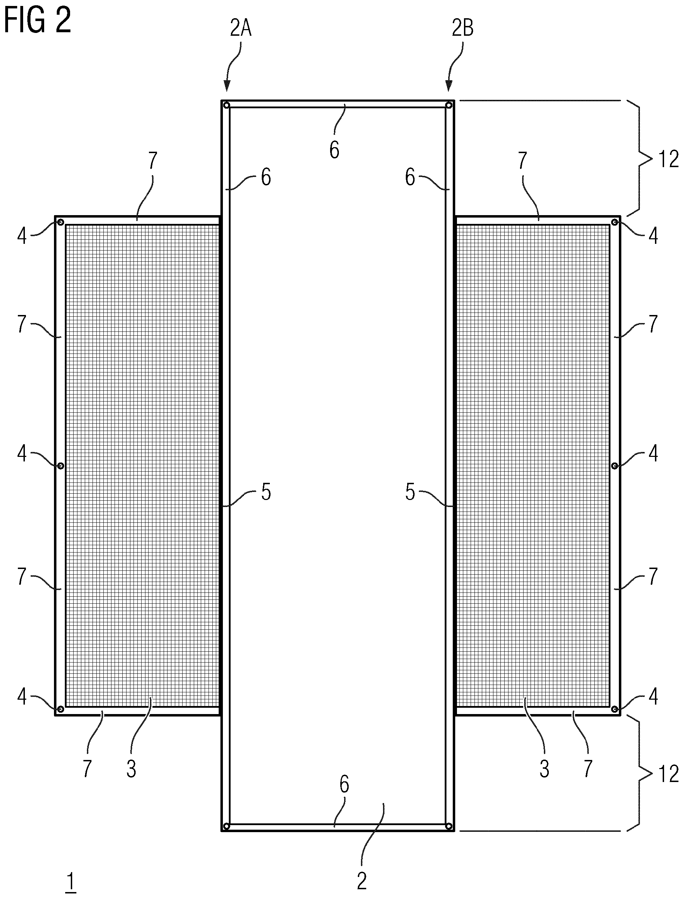

FIG. 2 shows stack protection 1 for the manual protection of stacked timber 9 (such as firewood, delimbed stems, short logs, sawn timber or similar) from rain and impacts of weather while stored outdoors. Stack protection 1 comprises i) upper part 2 in the shape of an oblong strip, which upper part 2 comprises tarpaulin or consists of tarpaulin, and ii) side parts 3 in the shape of an oblong strip, which side parts 3 are fastened to both side edges 2A, 2B of upper part 2 and are shorter than side edges 2A, 2B, and which side parts 3 comprise a protective net or consist of a protective net. Moreover, stack protection 1 comprises fastening means 4 arranged in both side parts 3 for anchoring stack protection 1. The anchoring is most preferably implemented by means of rope 8 or similar. Rope 8 can be fastened, for example, to ground timber 10 or some suitable stationary anchoring point. Rope 8 can also be used for tightening side parts 3 to each other (cf. FIG 1).

Each side part 3 is most preferably an oblong strip or comprises an oblong strip.

Upper part 2 and side part 3 most preferably comprise between them fastening seam 5 with a shared material. This can be implemented by sewing, but more preferably as a welding seam, such as as an ultrasonic seam formed by using ultrasonic welding.

Fastening means 4 most preferably comprise a number of fastening rings for rope fastening. Fastening means 4 can be embedded in side parts 3, most preferably in their corners, and optionally also in the middle area between corners.

Most preferably, there is hem 6 in all edges of upper part 2.

It is preferable to implement fastening seam 5 in at least one hem 6.

There can be hem 7 in the outer edges of side parts 3.

Fastening means 4 is most preferably fastened to hem 7.

Most preferably, the tarpaulin in upper part 2 is of or comprises technical fabric - such as PVC fabric - which has a first warp thickness. Most preferably, the protective net in side part 3 is of or comprises technical fabric net - such as PVC fabric net - which has a second warp thickness, so that the first warp thickness is smaller than the second warp thickness.

The tarpaulin in upper part 2 can be of or comprise technical fabric, the features of which optionally comprise one or more of the following:
- warp thickness 500x500 D,
- warp density 9x9 per inch (2,54 cm),
- weight 350 g/m² or at least 300 g/m².

The protective net in side parts 3 can be of or comprise technical fabric net, the features of which optionally comprise one or more of the following:
- warp thickness 1000x1000 D,
- warp density 9x9 per inch (2,54 cm),
- weight 250 g/m² or at least 200 g/m².

As stated above, the technical fabric is of or comprises PVC fabric, and the technical net is of or comprises PVC fabric net. PVC fabric means a weft (such as polyester weft), which is coated with coloured PVC. The PVC fabric net is implemented in a corresponding manner; however, so that there are holes 11 in the net (cf. FIG 1) to improve ventilation.

FIG 1 shows the way in which stack protection 1 is used. Upper part 2 is placed over stacked timber 9 most preferably so that laps 12 are hanging over the end of the stack. Side parts 3 come to the side of the stack. After this, stack protection 1 is anchored by means of fastening means 4 by, for example, tying with rope 8 to ground timber 10. Side parts 3 are also fastened to each other most preferably by means of fastening means 4.

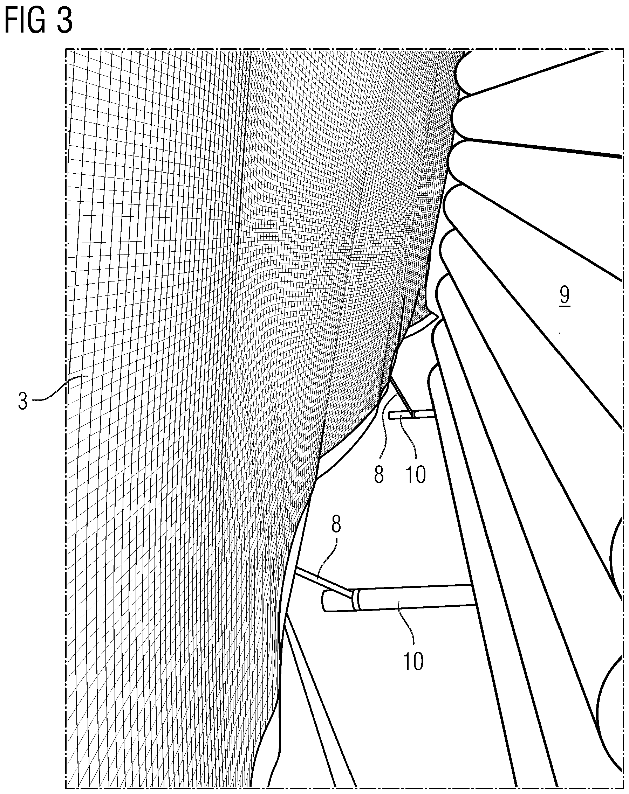

Based on what is shown in FIG 1 and FIG 3, it is obvious that rain water and melt water run primarily along upper part 2 and along the net in side parts 3. Since the net in side parts 3 is most preferably not in contact with the timber (cf. FIG 3), the timber also remains drier. In this case, the rain water and melt water run along side parts 3 downwards, preferably all the way to the ground. On the other hand, by choosing the material of side parts 3 suitably (especially the size of holes 11), an effect is created where the net in side parts 3 essentially stops drizzle and generally also rain, which comes diagonally, sufficiently well.

### List of reference numbers used

- 1: stack protection
- 2: upper part
- 2A, 2B: side edge
- 3: side part
- 4: fastening means (such as fastening ring)
- 5: fastening seam
- 6: hem
- 7: hem
- 8: rope
- 9: stacked timber
- 10: ground timber
- 11: hole
- 12: lap

## Claims

1. Stack protection (1) for the manual protection of stacked timber
- such as especially firewood, delimbed stems, short logs or sawn timber - from rain and impacts of weather while stored outdoors,
wherein the stack protection (1) comprises:
- an upper part (2) in the shape of an oblong strip, which upper part (2) comprises tarpaulin or consists of tarpaulin;
- side parts (3) in the shape of an oblong strip, which side parts (3) are fastened to both side edges (2A, 2B) of the upper part (2), which side parts (3) comprise a protective net or consist of a protective net;
- fastening means (4) arranged in both side parts (3) for anchoring the stack protection (1) **characterized in that**
the side parts (3) which are fastened to both the side edges (2A, 2B) of the upper part (2) are shorter than said side edges.

2. Stack protection (1) according to claim 1, **where:** each side part (3) is an oblong strip or comprises an oblong strip.

3. Stack protection (1) according to claim 1 or 2, **where:** the upper part (2) and side part (3) comprise between them a fastening seam (5) with a shared material, which fastening seam is preferably a welding seam, most preferably an ultrasonic welding seam.

4. Stack protection (1) according to any one of the preceding claims 1 - 3, **where:** the fastening means (4) comprise a number of fastening rings for rope fastening.

5. Stack protection (1) according to any one of the preceding claims 1 - 4, **where:** the fastening means (4) is embedded in the side parts (3), most preferably in the corners, and optionally also in the middle area between corners.

6. Stack protection (1) according to any one of the preceding claims 1 - 5, **where:** there is a hem (6) in all edges of the upper part (2).

7. Stack protection (1) according to claim 6, **where:** the fastening seam (5) according to claim 3 is in at least one hem (6).

8. Stack protection (1) according to any one of the preceding claims 1 - 7, **where:** there is a hem (7) in the outer edges of the side parts (3).

9. Stack protection (1) according to claim 8, **where:** the fastening means (4) according to claim 4 or 5 is in at least one hem (7).

10. Stack protection (1) according to any one of the preceding claims 1 - 9, **where:** the tarpaulin in the upper part (2) is of or comprises technical fabric - most preferably PVC fabric - which has a first warp thickness, and the protective net in the side part (3) is of or comprises technical fabric net - most preferably PVC fabric net - which has a second warp thickness, so that the first warp thickness is smaller than the second warp thickness.

11. Stack protection (1) according to any one of the preceding claims 1 - 10, **where:** the tarpaulin in the upper part (2) is of or comprises technical fabric, the features of which optionally comprise one or more of the following:
- warp thickness 500x500 D,
- warp density 9x9 per inch (2,54 cm),
- weight 350 g/m² or at least 300 g/m².

12. Stack protection (1) according to any one of the preceding claims 1 - 11, **where:** the protective net in the side parts (3) is of or comprises technical fabric net, the features of which optionally comprise one or more of the following:
- warp thickness 1000x1000 D,
- warp density 9x9 per inch (2,54 cm),
- weight 250 g/m² or at least 200 g/m².

13. Stack protection (1) according to any one of the claims 10 - 12, where: the technical fabric is of or comprises PVC fabric, and the technical net is of or comprises PVC fabric net.

## Patentansprüche

1. Stapelschutz (1) zum manuellen Schutz gestapelten Holzes - wie insbesondere Feuerholz, entastete Stämme, kurze Scheite oder gesägtes Holz - vor Regen und Witterungseinflüssen während der Lagerung im Außenbereich, **worin** der Stapelschutz (1) folgendes umfasst:
- einen oberen Teil (2) in Form eines rechteckigen Streifens, wobei der obere Teil (2) eine Plane umfasst oder aus einer Plane besteht;
- Seitenteile (3) in Form eines rechteckigen Streifens, wobei die Seitenteile (3) an beiden Seitenkanten (2A, 2B) des oberen Teils (2) befestigt sind, wobei die Seitenteile (3) ein Schutznetz umfassen oder aus einem Schutznetz bestehen;
- Befestigungsmittel (4), die in beiden Seitenteilen (3) angeordnet sind, um den Stapelschutz (1) zu verankern, **dadurch gekennzeichnet, dass** die Seitenteile (3), die an beiden Seitenkanten (2A, 2B) des oberen Teils (2) befestigt sind, kürzer sind als die Seitenkanten.

2. Stapelschutz (1) nach Anspruch 1, **in dem:** jedes Seitenteil (3) ein rechteckiger Streifen ist oder einen rechteckigen Streifen umfasst.

3. Stapelschutz (1) nach Anspruch 1 oder 2, **in dem:** der obere Teil (2) und das Seitenteil (3) zwischen sich eine Befestigungsnaht (5) aus einem gemeinsamen Material umfassen, wobei die Befestigungsnaht vorzugsweise eine Schweißnaht, am besten eine Ultraschallschweißnaht ist.

4. Stapelschutz (1) nach einem der vorhergehenden Ansprüche 1 - 3, **in dem:** die Befestigungsmittel (4) eine Anzahl Befestigungsringe zur Befestigung mit einem Seil umfassen.

5. Stapelschutz (1) nach einem der vorhergehenden Ansprüche 1 - 4, **in dem:** das Befestigungsmittel (4) in die Seitenteile (3) eingebettet ist, am besten in den Ecken und optional auch im mittleren Bereich zwischen den Ecken.

6. Stapelschutz (1) nach einem der vorhergehenden Ansprüche 1 - 5, **in dem:** sich ein Saum (6) an allen Kanten des oberen Teils (2) befindet.

7. Stapelschutz (1) nach Anspruch 6, **in dem:** sich die Befestigungsnaht (5) nach Anspruch 3 an mindestens einem Saum (6) befindet.

8. Stapelschutz (1) nach einem der vorhergehenden Ansprüche 1 - 7, **in dem:** sich ein Saum (7) an den äußeren Kanten der Seitenteile (3) befindet.

9. Stapelschutz (1) nach Anspruch 8, **in dem:** sich das Befestigungsmittel (4) nach Anspruch 4 oder 5 in mindestens einem Saum (7) befindet.

10. Stapelschutz (1) nach einem der vorhergehenden Ansprüche 1 - 9, **in dem:** die Plane im oberen Teil (2) aus technischem Gewebe besteht oder dieses umfasst - am besten PVC-Gewebe - das eine erste Kettenstärke aufweist und das Schutznetz im Seitenteil (3) aus einem Netz aus technischem Gewebe besteht oder dieses umfasst - am besten Netz aus PVC-Gewebe - das eine zweite Kettenstärke aufweist, so, dass die erste Kettenstärke kleiner ist, als die zweite Kettenstärke.

11. Stapelschutz (1) nach einem der vorhergehenden Ansprüche 1 - 10, **in dem:** die Plane im oberen Teil (2) aus technischem Gewebe besteht oder dieses umfasst, dessen Merkmale optional eines oder mehrere des Folgenden umfassen:
- Kettenstärke 500x500 D,
- Kettendichte 9x9 pro Inch (2,54 cm),
- Gewicht 350 g/m² oder zumindest 300 g/m².

12. Stapelschutz (1) nach einem der vorhergehenden Ansprüche 1 - 11, **in dem:** das Schutznetz in den Seitenteilen (3) aus Netz aus technischem Gewebe besteht oder dieses umfasst, dessen Merkmale optional eines oder mehrere des Folgenden umfassen:
- Kettenstärke 1000x1000 D,
- Kettendichte 9x9 pro Inch (2,54 cm),
- Gewicht 250 g/m² oder zumindest 200 g/m².

13. Stapelschutz (1) nach einem der Ansprüche 10 - 12, **in dem:** das technische Gewebe aus PVC-Gewebe besteht oder dieses umfasst und das technische Netz aus Netz aus PVC-Gewebe besteht oder dieses umfasst.

## Revendications

1. Protection de pile (1) pour protéger manuellement contre la pluie et les intempéries le bois empilé, tel que le bois de chauffage, les troncs ébranchés, les grumes courtes ou le bois scié, stocké à l'extérieur, **dans laquelle** ladite protection de pile (1) comprend :
- une partie supérieure (2) en forme de bande oblongue, laquelle partie supérieure (2) est constituée d'une bâche ou se compose d'une bâche ;
- des parties latérales (3) en forme de bande oblongue, lesquelles parties latérales (3) sont fixées aux deux bords latéraux (2A, 2B) de la partie supérieure (2), lesquelles parties latérales (3) comprenant un filet de protection ou étant constituées d'un filet de protection ;
- des moyens de fixation (4) disposés sur les deux parties latérales (3) afin d'ancrer la protection de pile (1) **caractérisés en ce que** lesdites parties latérales (3) qui sont fixées aux deux bords latéraux (2A, 2B) de la partie supérieure (2) sont plus courtes que les bords latéraux.

2. Protection de pile (1) selon la revendication 1, **dans laquelle** : chaque partie latérale (3) est une bande oblongue ou est constituée d'une bande oblongue.

3. Protection de pile (1) selon la revendication 1 ou la revendication 2, **dans laquelle** : la partie supérieure (2) et la partie latérale (3) comportent entre elles un joint de fixation (5) composé d'un matériau commun, lequel joint de fixation étant de préférence un joint de soudure, plus préférablement un joint de soudure par ultrasons.

4. Protection de pile (1) selon l'une quelconque des revendications 1 à 3, **dans laquelle** : les moyens de fixation (4) comprennent plusieurs anneaux de fixation permettant de fixer une corde.

5. Protection de pile (1) selon l'une quelconque des revendications 1 à 4 **dans laquelle** : les moyens de fixation (4) sont intégrés aux parties latérales (3), de préférence dans les coins, et éventuellement dans la zone centrale située entre les coins.

6. Protection de pile (1) selon l'une quelconque des revendications 1 à 5 **dans laquelle** : un ourlet (6) est réalisé sur tous les bords de la partie supérieure (2).

7. Protection de pile (1) selon la revendication 6, **dans laquelle** : le joint de fixation (5) selon la revendication 3 se trouve dans au moins un ourlet (6).

8. Protection de pile (1) selon l'une quelconque des revendications 1 à 7 **dans laquelle** : un ourlet (7) est réalisé sur tous les bords extérieurs des parties latérales (3).

9. Protection de pile (1) selon la revendication 8, **dans laquelle** : les moyens de fixation (4) selon la revendication 4 ou la revendication 5 se trouvent dans au moins un ourlet (7).

10. Protection de pile (1) selon l'une quelconque des revendications 1 à 9 **dans laquelle** : la bâche de la partie supérieure (2) est constituée d'un tissu technique - de préférence en PVC - présentant une première épaisseur de chaîne, et le filet de protection de la partie latérale (3) est constitué d'un filet en tissu filet technique - de préférence en PVC - présentant une deuxième épaisseur de chaîne, de sorte que la première épaisseur de chaîne est plus petite que la deuxième épaisseur de chaîne.

11. Protection de pile (1) selon l'une quelconque des revendications 1 à 10 **dans laquelle** : la bâche de la partie supérieure (2) est constituée d'un tissu technique, dont les caractéristiques peuvent comprendre un ou plusieurs des éléments suivants :
- une épaisseur de chaîne de 500x500 D,
- une densité de chaîne de 9x9 par pouce (2,54 cm),
- un poids de 350 g/m² ou au moins 300 g/m².

12. Protection de pile (1) selon l'une quelconque des revendications 1 à 11 **dans laquelle** : le filet protecteur composant les parties latérales (3) est constitué d'un tissu filet technique, dont les caractéristiques peuvent comprendre un ou plusieurs des éléments suivants :
- une épaisseur de chaîne de 1000x1000 D,
- une densité de chaîne de 9x9 par pouce (2,54 cm),
- un poids de 250 g/m² ou au moins 200 g/m².

13. Protection de pile (1) selon l'une quelconque des revendications 10 à 12 **dans laquelle** : le tissu technique est constitué de tissu en PVC et le filet technique est constitué de tissu filet en PVC.
